# EUROPÄISCHE PATENTSCHRIFT

(11) **EP 3 841 446 B1**
(45) Veröffentlichungstag und Bekanntmachung des Hinweises auf die Patenterteilung: **13.09.2023**
(21) Anmeldenummer: 20725631.4
(22) Anmeldetag: 28.04.2020
(51) Int. Cl.: G05D 16/06

(54) **DRUCKMINDERUNGSVENTIL**
PRESSURE REDUCING VALVE
SOUPAPE DE RÉDUCTION DE PRESSION

(30) Priorität: 17.05.2019 DE 102019113168; 17.05.2019 DE 202019102814 U
(43) Veröffentlichungstag der Anmeldung: 30.06.2021
(73) Patentinhaber: Goetze KG, 71636 Ludwigsburg (DE)
(72) Erfinder: BRAUN, David, 74821 Mosbach (DE); SCHOTT, Steffen, 74821 Mosbach (DE)
(74) Vertreter: Fleck, Hermann-Josef
(86) Internationale Anmeldenummer: PCT/EP2020/061707
(87) Internationale Veröffentlichungsnummer: WO 2020/233949

(56) Entgegenhaltungen:
- EP-A1- 2 523 063
- EP-A1- 2 523 063
- EP-A2- 0 777 168
- DE-A1- 1 600 732
- DE-A1-102008 050 922
- FR-A1- 2 652 427
- US-A- 5 443 083
- US-A1- 2011 162 730

## Beschreibung

Die Erfindung bezieht sich auf ein Druckminderungsventil für eine durch eine Leitung strömende Flüssigkeit mit einem sich in einer axialen Richtung entlang einer Gehäuseachse erstreckenden Gehäuse, in dem in einem Gehäuseunterteil zwischen einem stromaufseitigen Eingangsbereich mit seitlicher Eingangsöffnung und einem stromabseitigen Ausgangsbereich mit seitlicher Ausgangsöffnung eine quer, insbesondere rechtwinklig zur Gehäuseachse liegende Zwischenwand mit Durchführöffnung und eine Druckraumanordnung ausgebildet sind, welche von einem darüber in einem Gehäuseoberteil befindlichen Einstellraum mittels einer umfangsseitig gehäusefest eingebauten flexiblen Membran eines Ventileinsatzes getrennt ist, wobei die Druckraumanordnung zwischen der Unterseite der Membran und der Oberseite eines ebenfalls gehäusefest eingebauten biegesteifen, insbesondere starren Zwischenteils einen Zwischenraum und einen mit diesem über mindestens eine in dem Zwischenteil angeordnete Durchgangsbohrung flüssigkeitsleitend in Verbindung gebrachten Durchströmungsraum umfasst, wobei die Membran in ihrem zentralen Bereich mit einem achsparallel oder koaxial zur Gehäuseachse angeordneten und in axialer Richtung hin und her beweglichen Ventilstößel ortsfest und flüssigkeitsdicht verbunden ist, welcher sich flüssigkeits-gedichtet verschieblich durch eine zentrale Durchgangsöffnung des Zwischenteils in den Durchströmungsraum erstreckt und in diesem ortsfest mit einem Schließelement verbunden ist, und wobei ein Strömungsquerschnitt zwischen der Unterseite des Zwischenteils und der Oberseite des Schließelements entlang eines ringförmigen Dichtbereichs einstellbar ist, indem eine auf den Ventilstößel mittels einer vorgespannten Feder wirkende Federkraft zum Verstellen des Schließelements in Öffnungsrichtung unter Erweitern des Strömungsquerschnitts wirkt und eine durch den Flüssigkeitsdruck in dem Zwischenraum bewirkte Membrankraft zum Verstellen des Schließelements in Schließrichtung unter Verengen des Strömungsquerschnitts wirkt und eine Einstellung des Strömungsquerschnitts sich durch Ausgleich von Federkraft und Membrankraft ergibt.

Ein Druckminderungsventil dieser Art ist in der EP 0 650 109 A1 als bekannt ausgewiesen. Das Druckminderungsventil (Druckminderer) weist dabei ein sich entlang einer Gehäuseachse erstreckendes Gehäuse mit einem Gehäuseunterteil und einem darauf in einem Verbindungsbereich aufgeschraubten Gehäuseoberteil auf, wobei im Verbindungsbereich eine Membran als Regelmembran umfangsseitig eingeklemmt ist. Zwischen einer in dem Gehäuseunterteil ausgebildeten Einlasskammer und einer davon mittels einer Trennwand getrennten Auslasskammer ist in einen Durchbruch der senkrecht zur Gehäuseachse angeordneten Trennwand ein Druckminderereinsatz mit einem trichterförmigen Einsatzgehäuse, einem Ventilsitz und einem mit der Regelmembran und einem Regelmembranteller verbundenen Ventilstößel eingesetzt, der an seinem unteren Endabschnitt einen mit dem Ventilsitz zusammenwirkenden Ventilteller trägt. Das trichterförmige Einsatzgehäuse ist an seinem weiten Ende durch die Regelmembran abgeschlossen und bildet eine Regeldruckkammer.

In der US 2011/162730 A1 ist ein Druckminderungsventil für Gase oder Flüssigkeiten angegeben, bei dem in einem Gehäuseunterteil zwischen einem Eingangsbereich und einem Ausgangsbereich eines Durchströmungsraums eine Zwischenwand mit einer Durchgangsöffnung angeordnet ist, die von einem Ventilstößel durchsetzt ist. An der Unterseite der Zwischenwand ist ein Dichtbereich mit einem Ventilsitz vorhanden, mit dem ein an dem Ventilstößel ausgebildeter umlaufender Vorsprung zum Bilden eines einstellbaren Strömungsquerschnitts zusammenwirkt. Zudem ist zwischen dem Ausgangsbereich des Durchströmungsraums und einem Membranraum ein gehäusefestes Zwischenteil angeordnet, in dem eine fluidleitende Durchgangsbohrung angeordnet ist, um eine Druckregulierung unter Nutzung des Venturi-Effektes zu bewirken.

Ähnliche Druckminderungsventile wie die US 2011/162730 A1, bei denen der Venturi-Effekt bei der Druckregulierung genutzt wird, zeigen auch die US 5 443 083 A und die EP 0 777 168 A2.

Weitere Druckminderungsventile, bei denen zur Druckregulierung der Venturi-Effekt genutzt wird, sind in der DE 1 600 732 A1 und in der DE 10 2008 050922 A1 vorgeschlagen.

Der Ventilsitz ist über Stege mit dem Einsatzgehäuse des Druckminderereinsatzes verbunden und abdichtend in dem Durchbruch der Trennwand gehalten, wobei die Stege Kanäle enthalten, welche die Auslasskammer mit der Regeldruckkammer verbinden. Aus diese Weise wird in der Regeldruckkammer ein von dem Druck in der Auslasskammer abhängiger Membrandruck erzeugt, der einer auf die Membran vom Gehäuseoberteil aus wirkenden Federkraft entgegengerichtet ist, wobei die Federkraft in Öffnungsrichtung des Druckminderereinsatzes und die Membrankraft in Schließrichtung des Druckminderereinsatzes gerichtet ist, sodass das ausgangsseitige Druckniveau gegenüber einem erhöhten eingangsseitigen Druck durch Wahl der Federvorspannung auf ein bestimmtes Maß reduzierbar ist, wie bei derartigen Druckminderern üblich.

Ein weiteres Druckminderungsventil ist in der DE 195 39 239 A1 angegeben. Bei diesem bekannten Druckminderungsventil ist in einem Gehäuseunterteil eine Druckraumanordnung mit einem von einer Membran abgeschlossenen Membran-raum und einem davon mittels eines Zwischenteils getrennten Durchströmungsraum angeordnet, wobei zwischen einem stromaufseitigen Eingangsbereich und einem stromabseitigen Ausgangsbereich eine Zwischenwand mit einer Durchführöffnung vorhanden ist, in der ein mit einem Ventilstößel verbundenes Schließelement in axialer Richtung des Gehäuses verschieblich geführt ist. Das Zwischenteil ist auf seiner Unterseite in einem ringförmigen Dichtbereich mit einem Dichtring versehen und ein Strömungsquerschnitt zwischen der Unterseite des Zwischenteils und der Oberseite des Schließelements entlang des ringförmigen Dichtbereichs ist einstellbar, wobei sich eine auf den Ventilstößel wirkende Federkraft und eine in dem Zwischenraum bewirkte Membrankraft zum Verstellen des Schließelements aus-gleichen. Wie aus Fig. 1 der DE 195 39 239 A1 ersichtlich, ist zwischen dem Ausgangsbereich des Durchströmungsraums und dem Membranraum in einem dem Zwischenteil benachbarten Gehäuseabschnitt eine Durchgangsbohrung eingebracht, um den Ausgleich zwischen Federkraft und Membrankraft zu bewirken. Nähere Angaben bezüglich Ausbildung der Durchgangsbohrung sind nicht gemacht.

Ein weiterer Druckminderer dieser Art ist in der EP 2 523 063 B2 gezeigt. Auch bei diesem Druckminderer ist ein Ventilsitz zwischen einer Einlasskammer (Vordruckraum) und einer Auslasskammer (Hinterdruckraum) in einer rechtwinklig zur Gehäuseachse im Gehäuseunterteil vorhandenen Trennwand abdichtend gehalten und mit in Stegen des Ventilsitzes enthaltenen Kanälen versehen, welche die Auslasskammer mit einer Regeldruckkammer (Druckraum) verbinden, welche zwischen der zugewandten Unterseite einer Membran und der Oberseite eines Membanträgers gebildet ist. In der Regeldruckkammer bzw. dem Druckraum herrscht ein von dem Druck in der Auslasskammer abhängiger Druck, wodurch eine Membrankraft erzeugt wird, die einer von der Oberseite auf die Membran wirkenden Federkraft entgegenwirkt. Dadurch wird eine ausgangsseitige Druckminderung auf ein vorgebbares Druckniveau erreicht, indem ein Strömungsquerschnitt zwischen dem unteren Rand des Ventilsitzes und einem zugeordneten Ventilteller entsprechend dem Ausgleich zwischen der Federkraft und der Membrankraft reguliert wird, wobei der Ventilteller mit einem Ventilstößel verbunden ist, an dessen oberem Abschnitt die Membran befestigt ist. Bei dieser Ausführung wird durch Abschrägung des Ventilsitzes im Eingangsbereich der Druckleitungen ein mit der Strömung im Hinterdruckraum zusammenhängender Venturi-Effekt genutzt, um in dessen Abhängigkeit den Druck in dem Druckraum zusätzlich zu regulieren. Die Abschrägung am Eingang der Druckleitungen ist dabei nach radial außen und unten gerichtet, wobei die Anströmung des Ventiltellers, wie auch bei der Ausführung nach EP 0 650 109 A1, eingangsseitig von oben auf den Ventilteller erfolgt.

Um eine präzise Funktion insbesondere auch hinsichtlich einer genauen Regelung des ausgangsseitigen Druckniveaus zu erreichen, sind bei derartigen Druckminderern hohe Anforderungen an eine präzise Bearbeitung zu stellen, womit ein entsprechender Aufwand verbunden ist.

Der vorliegenden Erfindung liegt die Aufgabe zugrunde, ein Druckminderungsventil der eingangs genannten Art bereitzustellen, das eine präzise Funktion bei möglichst wenig Herstellungsaufwand ergibt.

Diese Aufgabe wird bei einem Druckminderungsventil mit den Merkmalen des Anspruchs 1 gelöst. Hierbei ist in Verbindung mit der Ausbildung nach dem Oberbegriff des Weiteren vorgesehen, dass das Schließelement in der Durchführöffnung der Zwischenwand in axialer Richtung verschieblich geführt ist, dass das Zwischenteil auf seiner Unterseite in dem Dichtbereich mit einem Dichtring versehen ist und dass die mindestens eine Durchgangsbohrung in dem Zwischenteil radial außerhalb des Dichtrings unmittelbar neben diesem oder in geringem Abstand kleiner als der halbe Innenradius des Dichtrings von diesem angeordnet ist.

Bei diesem Aufbau mit dem verschieblich in der Zwischenwand abgedichtet geführten Schließelement und dem darüber membranseitig angeordneten Zwischenteil wird das Zwischenteil von unten auf seiner Unterseite angeströmt und die Durchgangsbohrung(en) kann/können unter präziser Ausbildung und Anordnung mit relativ wenig Aufwand in das Zwischenteil eingearbeitet werden, wobei der Querschnitt der Durchgangsbohrung(en) nicht rund sein muss, sondern unterschiedliche Form aufweisen kann, und die Gestaltung der Unterseite des Zwischenteils in exakter Abstimmung auf die Eingangskontur, die Formung und die Anordnung der Durchgangsbohrungen so ausgebildet werden kann, dass die in diesem Bereich vorherrschenden Strömungsverhältnisse zum Erreichen einer möglichst genauen Regelung optimiert werden können. Durch die dabei eröffneten Gestaltungsmöglichkeiten lässt sich unter anderem der Venturi-Effekt gezielt mit hoher Wirksamkeit für die Regelung des ausgangsseitigen Druckniveaus nutzen.

Eine für die ausgangsseitige Druckregelung vorteilhafte Maßnahme besteht dabei darin, dass mehrere Durchgangsbohrungen auf einem gedachten Kreisring konzentrisch zu dem kreisförmigen Dichtring und in Umlaufrichtung äquidistant angeordnet sind.

Eine für die Beeinflussung der Strömungsverhältnisse und damit zusammenhängend der Druckregulierung weitere vorteilhafte Ausgestaltung wird dadurch erhalten, dass das Zwischenteil auf seiner Unterseite ausgehend von seinem ventilstößelseitigen zentralen Bereich nach außen hin bis in den Bereich des Dichtrings radialsymmetrisch konkav gewölbt ist, wobei die Tangente entlang des in einer Mittellängsebene verlaufenden Wölbungsquerschnitts im ventilstößelseitigen Anfangsbereich der Wölbung mit der Ventilstößelachse einen Winkel (β) zwischen 0° und 45°, insbesondere zwischen 0° und 30°, bildet und in dem ringdichtungsseitigen Endbereich einen Winkel (γ) zwischen 60° und 90°, insbesondere zwischen 75° und 90°, bildet.

Weitere vorteilhafte Maßnahmen zur Beeinflussung der Strömungsverhältnisse und für eine effektive Regelung bestehen darin, dass die Wandung der mindestens einen Durchgangsbohrung in ihrer dem Durchströmungsraum zugekehrten Stirnseite um die Eingangsöffnung in radialer Richtung nach außen und zur Oberseite hin gegenüber einer zur Gehäuseachse rechtwinkligen Querschnittsebene unter einem Winkel (α) zwischen 20° und 60°, insbesondere zwischen 30° und 55°, abgeschrägt ist.

Das Schließelement ist so ausgeführt, dass das Schließelement einen zumindest abschnittsweise zur Gehäuseachse konzentrischen, umlaufend geschlossenen zylindrischen Abschnitt aufweist, dass das Schließelement mit dem zylindrischen Abschnitt in der Durchführöffnung der Zwischenwand umfangsseitig abgedichtet, axial verschlieblich geführt ist, und dass das Schließelement mit mindestens einem Durchströmkanal versehen ist, um in den Eingangsbereich strömende Flüssigkeit in den Ausgangsbereich weiterzuleiten, wobei eine zum Ausgangsbereich führende Ausgangsöffnung des Durchströmkanals radial innerhalb des Dichtbereichs liegt. Dadurch kann das Schließelement vorteilhaft als Düse zum Anströmen der Unterseite des Zwischenteils genutzt und gestaltet werden.

Für den Aufbau und die Funktion trägt weiterhin vorteilhaft bei, dass der mindestens eine Durchströmkanal zumindest abschnittsweise, insbesondere in seinem zum Ausgangsbereich hin führenden Ausgangsabschnitt, parallel zur Gehäuseachse verläuft.

Verschiedene weitere vorteilhafte Ausbildungen werden dadurch erhalten, dass ein Durchströmkanal oder eine Anordnung aus mehreren Durchströmkanälen konzentrisch zur Gehäuseachse angeordnet ist. Vorteilhaft liegt dabei der sich ergebende kreisringförmige Ausströmbereich in axialer Draufsicht im Bereich der radialsymmetrischen konkaven Wölbung des Zwischenteils.

Für den Aufbau und die Funktion, wie Schutz und Vermeidung von Verschmutzung, sind des Weiteren die Maßnahmen von Vorteil, dass im Eingangsbereich zwischen einem Flüssigkeitseinlass und dem Schließelement ein Ventilkäfig angeordnet ist, der sich mit seiner Oberseite an die Unterseite der Zwischenwand anschließt und mit einer siebartigen oder gitterartigen Umfangswand das Schließelement unter Abstand umgibt.

Der Aufbau und die Funktion werden auch dadurch begünstigt, dass die Membran auf ihrer Oberseite in einem mittleren Flächenbereich von einem biegesteifen, insbesondere starren, Membranteller abgedeckt ist, auf dem eine die Federkraft auf die Membran und den Ventilstößel bewirkende Druckfeder abgestützt ist, wobei die Membran in einem radialseitig außerhalb des Membrantellers und innerhalb ihres umfangsseitigen Einspannbereichs liegenden Bereich flexibel in axialer Richtung auslenkbar ist.

Vorteile für den Aufbau und die Funktion ergeben sich auch dadurch, dass die Membran mit ihrem umfangsseitigen Einspannbereich zusammen mit einem umfangsseitigen Einspannbereich des Zwischenteils zwischen dem Gehäuseunterteil und dem Gehäuseoberteil fest eingeklemmt ist.

Weitere Vorteile für das Druckminderungsventil ergeben sich daraus, dass der Ventilstößel in seinem oberen Abschnitt in der zentralen Durchgangsöffnung des Zwischenteils und in seinem unteren Abschnitt vermittels des fest an ihm angebrachten Schließelements in der Durchführöffnung der Zwischenwand axial verschieblich geführt ist, um den Strömungsquerschnitt zum Erreichen einer definierten Druckminderung zu verändern, wobei sich die vorgegebene oder vorgebbare Federkraft und die Membrankraft ausgleichen.

Eine für die Herstellung und Funktion vorteilhafte Ausbildung besteht darin, dass zur verschieblichen flüssigkeitsgedichteten Durchführung des Ventilstößels durch die Durchgangsöffnung des Zwischenteils eine Spindeldichtung vorhanden ist und dass in die Oberfläche des Ventilstößels eine umlaufende Ringnut eingearbeitet ist, in die die Spindeldichtung eingesetzt ist, wobei sie radial außen dichtend auf der Innenfläche der als Führungsbohrung ausgestalteten Durchgangsöffnung gleitend mit dieser zusammenwirkt.

Mit diesen Maßnahmen werden bei vereinfachtem Aufbau erweiterte Gestaltungsmöglichkeiten erhalten, wobei gleichzeitig eine zuverlässige Führungs- und Dichtfunktion gewährleistet sind. Insgesamt lässt sich dabei auch die Ventilspindel (Ventilstößel) vereinfacht herstellen, da bezüglich ihrer Oberflächenbeschaffenheit nicht auf gute Gleiteigenschaften geachtet werden muss und die Nut in der Außenfläche einfach ausgebildet werden kann. Hingegen kann die Innenfläche der Führungsbohrung einfach mit hoher Oberflächengüte hergestellt werden, da keine Nut eingearbeitet werden muss. Das die Führungsbohrung aufweisende gehäusefeste Teil kann ohne Rücksicht auf eine einzubringende Dichtungsnut frei gestaltet werden.

Dabei besteht eine für die Fertigung vorteilhafte Ausgestaltung darin, dass der Ventilstößel bzw. die Ventilspindel zumindest im Bereich der Ringnut und in ihrem axial an diese angrenzenden Bereich eine geringere Oberflächengüte aufweist als die als Gleitfläche ausgebildete Innenfläche der Durchgangsöffnung.

Weitere vorteilhafte Ausführungsformen ergeben sich dadurch, dass der Ventilstößel bzw. die Ventilspindel aus Metall und das die Durchgangsöffnung aufweisende gehäusefeste Zwischenteil, insbesondere ein darin vorhandenes konzentrisches Mitteilteil, aus Kunststoff und/oder Metall besteht.

Beispielsweise kann dadurch der Ventilstößel (die Ventilspindel) als Stange in einfacher Fertigung gedreht werden, da dabei nicht auf eine geringe Rauigkeit und Reibeffekte zu achten ist. Beispielsweise kann das die Durchgangsöffnung in Form einer Führungsbohrung aufweisende gehäusefeste Teil aus Kunststoff ausgebildet sein, wodurch sich fertigungstechnisch eine im Vergleich zu einem gedrehten Teil sehr gute Oberflächengüte der Gleitfläche (Innenfläche) ergibt.

Ist vorgesehen, dass das Zwischenteil aus mindestens zwei Komponenten zusammengesetzt ist, wobei die mindestens zwei Komponenten einen die als Führungsbohrung ausgebildete Durchgangsöffnung aufweisenden Mittelteil und einen diesen umgebenden Außenring umfassen, so lässt sich z. B. eine gute Anpassung des Zwischenteils an unterschiedliche Teilfunktionen, wie Formung eines Strömungsraums, Ausbildung einer Einspannfunktion in dem Ventilgehäuse und/oder Herstellung einer Führungs- und Dichtfunktion im mittleren Bereich erreichen.

Für den Aufbau und die Funktion weitere vorteilhafte Maßnahmen bestehen darin, dass der Dichtring in eine Ausnehmung des Außenrings eingesetzt ist und von einer radial nach außen vorstehenden Überlappung des Mittelteils gehalten ist und darin, dass das Zwischenteil in einem Zweikomponenten-Spritzgussverfahren hergestellt ist.

Die Erfindung wird nachfolgend anhand von Ausführungsbeispielen unter Bezugnahme auf die Zeichnungen näher erläutert. Es zeigen:
- Fig. 1: ein Ausführungsbeispiel eines erfindungsgemäßen Druckminderungsventils im Längsschnitt,
- Fig. 2: einen vergrößerten Ausschnitt des Druckminderungsventils nach Fig. 1,
- Fig. 3: einen vergrößerten Ausschnitt eines weiteren Ausführungsbeispiels eines Druckminderungsventils im Längsschnitt und
- Fig. 4: einen noch weiter vergrößerten Ausschnitt des Druckminderungsventils nach Fig. 1.

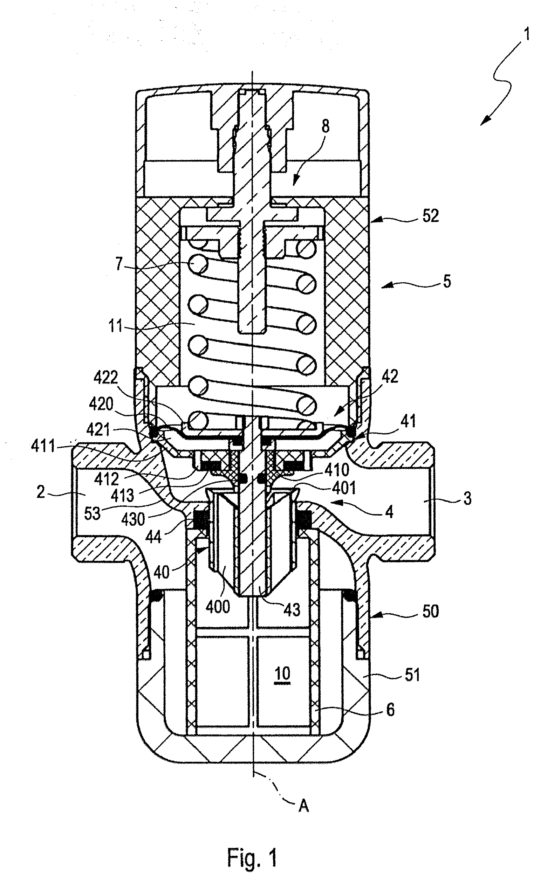

Figur 1 zeigt ein Druckminderungsventil 1 (meist kurz als Druckminderer bezeichnet) mit einem sich in Richtung einer Gehäuseachse A erstreckenden Gehäuse 5, das aus einem Gehäuseunterteil 50 mit einem unterseitigen Abdeckunterteil 51 und einem Gehäuseoberteil 52 zusammengesetzt ist. Das Gehäuseunterteil 50 umfasst einen einströmseitigen Eingangsbereich 2 und einen ausströmseitigen Ausgangsbereich 3, die im Bereich einer in einem Durchströmungsraum 10 angeordneten, rechtwinklig zur Gehäuseachse A liegenden Zwischenwand 53 voneinander getrennt sind. Das Gehäuseoberteil 52 ist vorliegend in einem Verbindungsbereich mittels eines Außengewindes in ein angepasstes Innengewinde des Gehäuseunterteils 50 eingeschraubt und abgedichtet. Die Gehäuseachse A kann bei einer abgewandelten Ausgestaltung z. B. schräg unter einem Winkel kleiner als 90° bezüglich eines Eingangsstutzens oder Ausgangsstutzens verlaufen.

In dem Gehäuseoberteil 52 ist in einem Einstellraum 11 eine Einstelleinheit 8 mit einer Druckfeder 7 angeordnet, deren Vorspannung über Einstellkomponenten der Einstelleinheit 8 auf eine definierte Federkraft voreinstellbar ist, um bei Anwendung des Druckminderungsventils 1 ausgangsseitig ein bestimmtes Druckniveau zu erhalten.

In dem Gehäuseunterteil 50 ist eine Druckraumanordnung ausgebildet, die von dem Einstellraum 11 mittels einer rechtwinklig zu der Gehäuseachse A eingespannten Membran 420 dichtend abgetrennt ist. Die Membran ist umfangsseitig zwischen dem Gehäuseoberteil 52 und dem Gehäuseunterteil 50 entlang einem umlaufenden Halterand eingeklemmt und in ihrem zentralen Bereich koaxial zur Gehäuseachse A von einem Ventilstößel 43 durchsetzt und an diesem abgedichtet und axial relativ zu diesem unverschieblich, ortsfest gehalten. Auf der Oberseite ist die Membran 420 in ihrem den Ventilstößel 43 (Ventilspindel) umgebenden zentralen Bereich mit einem Membranteller 422 versehen, auf dessen Oberseite sich die Unterseite der Feder 7 abstützt, die auf ihrer gegenüberliegenden Oberseite an einer Komponente der Einstelleinheit 8 in Wiederlage gebracht ist.

Die Membran 420 ist zusammen mit einem Außenring 411 eines Zwischenteils 41 zwischen dem Gehäuseoberteil 52 und dem Gehäuseunterteil 50 umfangsseitig mit ihrem Halterand eingespannt bzw. eingeklemmt und bildet zusammen mit der Oberseite des Zwischenteils 41 und ihrer Unterseite einen Zwischenraum 421, der über Durchgangsbohrungen 412 mit dem ausgangsseitigen Durchströmungsraum 10 flüssigkeitsleitend in Verbindung gebracht ist.

Die Membran 420 ist flexibel ausgebildet und insbesondere zwischen ihrem umfangsseitig eingespannten Halterand und dem davon beabstandeten Umfang des Membrantellers 422 flexibel gestaltet, sodass sie in axialer Richtung zusammen mit dem Ventilstößel 43 hin und her, vorliegend also auf und ab bewegbar ist, wobei in dem Zwischenraum 421 in Folge des dort über die Durchgangsbohrungen 412 herrschenden Flüssigkeitsdrucks eine Membrankraft auf der Unterseite der Membran 420 erzeugt wird, die der auf der Oberseite der Membran wirkenden Federkraft entgegen gerichtet ist. Bei Ausgleich zwischen Membrankraft und Federkraft nimmt dadurch die Membran 420 mit dem an ihr axial unverschieblich angebrachten Ventilstößel 43 eine definierte axiale Position in Abhängigkeit von dem in dem Durchströmungsraum 10 vorliegenden Flüssigkeitsdruck ein.

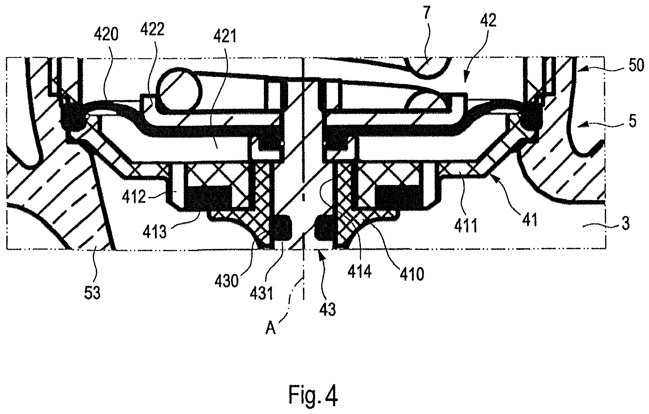

Der Ventilstößel 43 ist axial verschieblich durch eine zentrale Durchgangsöffnung 414 des Zwischenteils 41 geführt, wobei in dem gezeigten Ausführungsbeispiel in den zentralen Bereich des Außenrings 411 ein Mittelteil 410 eingesetzt, insbesondere eingeschraubt ist. Das Zwischenteil 41, vorliegend also das Mittelteil 410, bildet eine axiale Führung für den Ventilstößel 43 unter Abdichtung mittels eines in einer Umfangsnut (Ringnut 431, s. Fig. 4) des Ventilstößels 43 oder alternativ in einer Innennut des Mittelteils 410 eingesetzten Dichtelements, wie z. B. der Spindeldichtung 430. Der Ventilstößel 43 trägt auf seinem nach unten anschließenden Abschnitt ein ortsfest an ihm angebrachtes und somit mit ihm zusammen axial bewegtes Schließelement 40, das mit einer umfangsseitigen zylindrischen Wandung versehen ist und damit verschieblich und abgedichtet in eine Durchführöffnung 530 im zentralen Bereich der Zwischenwand 53 konzentrisch zur Gehäuseachse A eingesetzt und geführt ist, wobei in die die Durchführöffnung 530 umgebende Wandung in eine umlaufende Nut ein Dichtmittel 44 eingesetzt ist. In das Schließelement 40 sind ein oder mehrere Strömungskanäle 400 eingebracht, die bei dem gezeigten Ausführungsbeispiel parallel zur Gehäuseachse A bzw. Achse des Ventilstößels verlaufen und die Strömungsverbindung zwischen dem Eingangsbereich 2 und dem Ausgangsbereich 3 im Durchströmungsraum 10 herstellen.

Im eingangsseitigen Bereich des Durchströmungsraums 10 ist ein den unteren Bereich des Schließelements 40 umgebender Ventilkäfig 6 eingesetzt, der umfangsseitig mit einem Sieb versehen ist und an der Unterseite der Zwischenwand 53 in Anlage gebracht ist und sich in den Abdeckunterteil 51 erstreckt, welcher abnehmbar und abgedichtet in einen unteren Öffnungsbereich des Gehäuseunterteils 50 eingesetzt, insbesondere eingeschraubt ist, sodass der Ventilkäfig 6 von unten ungehindert zugänglich und reinigbar ist. Der obere stirnseitige umlaufende Rand des Ventilkäfigs 6 bildet bei dem gezeigten Ausführungsbeispiel gleichzeitig eine Halterung für das an der Unterseite der Zwischenwand 53 in die umlaufende Nut eingesetzte Dichtmittel 44.

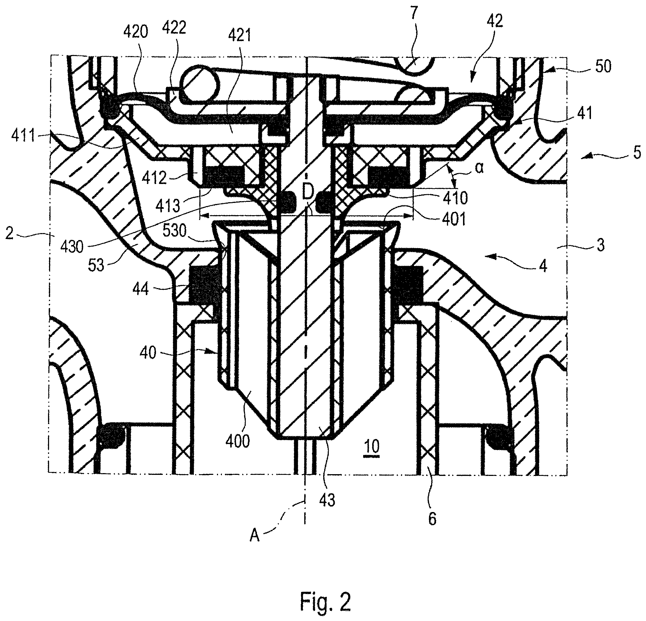

Eine wesentliche Besonderheit des erfindungsgemäßen Druckminderungsventils 1 besteht in der Ausbildung des Ventileinsatzes 4, der die Membraneinheit 42 mit der Membran 420, mit dem Zwischenraum 421 und mit dem Membranteller 422, den Zwischenteil 41, das Schließelement 40 sowie den Ventilstößel 43 umfasst, wie in Figur 2 vergrößert dargestellt.

Das Schließelement 40 ist in seinem oberen Randbereich mit einer umlaufenden Dichtkante bzw. Dichtfläche 401 versehen, die einen sich nach oben erweiternden Flächenbereich bildet und mit einem an der Unterseite des Zwischenteils 41 umlaufend eingesetzten Dichtring 413 dichtend in Anlage gebracht werden kann, um den Durchfluss der Flüssigkeit von dem Eingangsbereich 2 zu dem Ausgangsbereich 3 über den Durchströmungsraum 10 zu verschließen. Im Normalfall ist der Durchstömquerschnitt zwischen der Dichtfläche 401 und dem Dichtring 413 durch den sich selbsttätig regelnden Ausgleich zwischen der Federkraft und der Membrankraft so weit geöffnet, dass sich ausgangsseitig ein vorgegebenes Druckniveau bei unterschiedlichen eingangsseitigen Flüssigkeitsdrücken einstellt. Zum Erreichen einer möglichst genauen Einregelung des ausgangsseitigen Druckniveaus werden die Strömungsverhältnisse in dem Durchströmungsraum unterhalb des Zwischenteils 41 gezielt beeinflusst, um einen signifikanten Venturi-Effekt zu erzeugen, durch den der Druck in dem Zwischenraum 421 gegenüber dem Druck weiter am Ausgang und damit die Membrankraft reduziert wird und somit das Ventil infolge der Federkraft weiter öffnet.

Um eine möglichst gut ausgeprägte strömungsabhängige Druckbeeinflussung in dem Zwischenraum 421 zu bewirken, ist die Unterseite des Zwischenteils 41 im Längsschnitt bogenförmig konkav gerundet, wobei ein Winkel zwischen der Gehäuseachse und einer Tangente an die Rundung ausgehend von dem dem Ventilstößel 43 benachbarten unteren Bereich sich von einem Wert nahe 0° zunehmend auf einen Wert nahe 90° in dem von dem Ventilstößel 43 radial am weitesten außenliegenden (oberen) Bereich ändert, der den radial nach innen liegenden unteren Abschnitt des Dichtrings 413 überlappt. Diese konkave Rundung des Zwischenteils 41, die vorliegend in dem Mittelteil 410 ausgebildet ist, verläuft radialsymmetrisch vollständig um den Ventilstößel 43 und erstreckt sich mit dem radial äußeren Bereich in axialer Draufsicht bis in die Nähe des inneren Rands der Dichtfläche 401 des Schließelements 40 und wird von diesem im geschlossenen Zustand radial außen übergriffen. Durch diese Ausbildung wird die eingangsseitig in den Durchströmungsraum 10 einströmende Flüssigkeit im geöffneten Zustand mittels des vorzugsweise um den Ventilstößel 43 in Umlaufrichtung herum zumindest abschnittsweise angeordneten, sich in Richtung der Gehäuseachse A erstreckenden Durchströmkanals 400 im Wesentlichen achsparallel auf die konkave Unterseite des zentralen Bereichs des Schließelements 40 geleitet und von dort nach außen umgelenkt und dem ausgangsseitigen Anschluss des Ausgangsbereichs 3 zugeführt. Das Schließelement 40 bildet so eine Düse, mittels deren die Flüssigkeitsströmung insbesondere im Querschnittsbereich zwischen Dichtfläche 401 und Dichtring 413 mit hoher Wirksamkeit zum Erzeugen des Venturi-Effekts im Bereich der Durchgangsbohrungen 412 gezielt geformt wird, wobei die unterseitigen Eingänge der Durchgangsbohrungen 412 möglichst nahe, insbesondere unmittelbar angrenzend an den radial äußeren Rand des Dichtrings 413 angeordnet sind. Zudem ist der untere Öffnungsrand der Durchgangsbohrungen 412 bezüglich einer Mittelquerebene des Ventilstößels 43 (Ebene rechtwinklig zur Gehäuseachse A) radial nach außen oben unter einem Winkel α zwischen 20° und 60°, insbesondere zwischen 30° und 55° abgeschrägt, wodurch der Venturi-Effekt zusätzlich beeinflusst und der Druck in dem Zwischenraum 421 in Abhängigkeit von den Strömungsbedingungen am unteren Eingangsbereich der Durchgangsbohrungen 412 signifikanten Änderungen unterworfen ist. Dadurch kann das ausgangsseitig erhaltene Druckniveau mit hoher Genauigkeit auf den vorgegebenen Einstelldruck eingeregelt und konstant gehalten werden. Dabei kann z. B. auch nur ein radial außen liegender Teil der unteren eingangsseitigen Querschnittsfläche der Durchgangsbohrungen 412 abgeschrägt sein, wodurch sich der Venturi-Effekt ebenfalls noch beeinflussen lässt, wie sich in Untersuchungen der Erfinder gezeigt hat.

Wie aus den Figuren ersichtlich, liegt bei dem gezeigten Ausführungsbeispiel die radial obere Hälfte des ausgangsseitigen Ausströmabschnitts des Ausgangsbereichs 3 wie auch die radial obere Hälfte des eingangsseitigen Eingangsabschnitts des Eingangsbereichs 2 bezüglich einer zur Gehäuseachse A rechtwinkligen Querebene im Bereich des umlaufenden Öffnungsquerschnitts zwischen der Dichtfläche 401 und der Unterseite des Dichtrings 413, wobei der obere Flächenbereich des Eingangsabschnitts und des Ausgangsabschnitts in etwa in der Querschnittsebene des Dichtrings 413 liegen.

Die Durchgangsbohrungen 412, die sich vorzugsweise parallel zur Gehäuseachse A erstrecken, liegen mit ihren unterseitigen Eingangsöffnungen auf einem zur Gehäuseachse bzw. Ventilstößelachse gedachten Umkreis mit einem Durchmesser D.

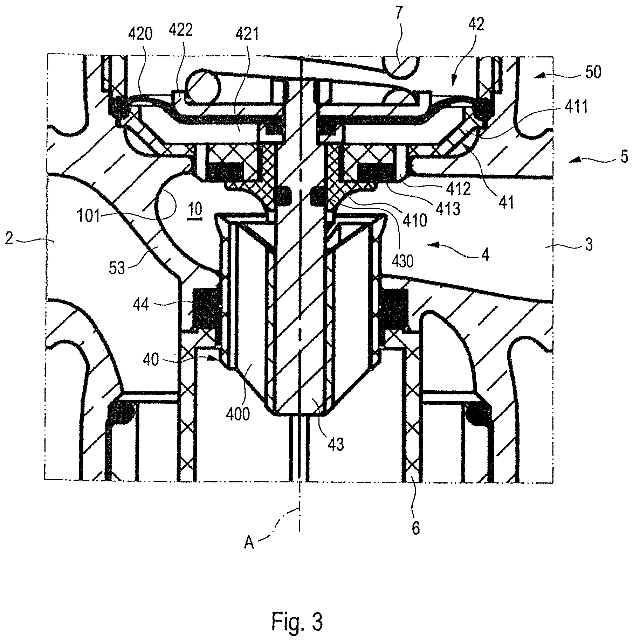

Bei einer in Fig. 3 gezeigten Ausgestaltung ist der Durchströmungsraum 10 in dem Bereich oberhalb des Schließelements 40 in seinem von dem Ausgangsbereich 3 abgelegenen Bereich im Längsschnitt gerundet geformt. Durch die Rundung 101 wird die Strömung zusätzlich beeinflusst, insbesondere im Zusammenwirken mit dem oberen äußeren Flächenbereich des Schließelements 40, worüber die an ihr umgelenkte Strömung in Ausgangsrichtung geführt wird.

Das Schließelement 40 ist auf seiner Unterseite umlaufend radial nach außen und oben angeschrägt oder abgerundet, sodass der Durchströmungskanal 400 an seinem strömungsseitigen Eingang strömungsgünstig zum Einleiten der einströmenden Flüssigkeit ausgebildet ist. Die durch den Strömungskanal 400 geleitete Flüssigkeit strömt das Zwischenteil 41 von unten an, wodurch sich für die Konstantregelung des ausgangsseitigen Druckniveaus günstige Strömungsbedingungen ergeben. Die strömungsoptimierte Geometrie des Gehäuses 5 und des Ventileinsatzes 4 ergeben eine nicht nur für die Funktion des Druckminderungsventils 1, sondern auch für dessen Aufbau und Instandhaltung vorteilhafte Ausgestaltung, die insbesondere im Bereich der Trinkwasserversorgung für Haushalte wesentliche Vorteile bietet. Durch die strömungsoptimierte Kontur des Zwischenteils 41 mit dem Mittelteil 410 und dem Dichtring 413 sowie den Durchgangsbohrungen 412 wird das Trinkwasser an dem Dichtring 413 vorbei durch den Ausgangsbereich 3 des Gehäuses 5 in die nachfolgende Rohrleitung übergeben. Die Druckreduzierung findet im Ventileinsatz statt.

Der Venturi-Effekt wird im Bereich hoher Strömungsgeschwindigkeit erzielt, wodurch der Druck in dem Zwischenraum 421 unter der Membran 420 geringer ist als der Druck weiter ausgangsseitig. Dadurch wird die Membrankraft ebenfalls geringer und die Federkraft ist im Vergleich dazu deutlich höher, wodurch sich das Ventil weiter öffnet. Dadurch entsteht ein geringerer Strömungswiderstand und somit ein geringerer Druckverlust bei entsprechenden Durchflüssen. Negative Reibeffekte können damit verringert oder ganz ausgeglichen werden, womit die Regelungsgenauigkeit erhöht wird. Denn in der Praxis sinkt der Ausgangsdruck, wenn sich der Durchfluss erhöht, was unter anderem durch Reibeffekte, Federraten, innere Rückstellkräfte und Wirkdurchmesseränderungen der Membran begründet ist. Bei dem vorstehend beschriebenen Aufbau ist der Dichtring 413 nicht beweglich, sondern fest mit dem Zwischenteil 41 eingespannt, wodurch Vibrationen und eine damit verbundene unerwünschte Geräuschentwicklung reduziert werden.

Wie insbesondere aus Fig. 4 ersichtlich, ist die Spindeldichtung 430 in die Ringnut 431 des Ventilstößels 43 eingesetzt und die Durchgangsbohrung 414 ist in dem Mittelteil 410 axial ausgedehnt und bildet eine Führungsbohrung für den darin mittels der Spindeldichtung 430 abgedichtet verschieblich geführten Ventilstößel 43. Dabei ist die axiale Ausdehnung der Durchgangsbohrung 414 ausreichend lang bemessen, um die Abdichtung mittels der Spindeldichtung 430 über den gesamten axialen Verstellhub des Ventilstößels 43 sicherzustellen. Dies wird vorteilhaft auch im Zusammenhang mit der konkaven, radialsymmetrisch umlaufenden außenseitigen Wölbung des Zwischenteils 41, insbesondere des Mittelteils 410, erreicht.

Die in die Ringnut 431 des Ventilstößels 43 eingesetzte Spindeldichtung 430 dichtet mit ihrer radial außen liegenden Seite die Durchführung des Ventilstößels 43 in der Führungsbohrung bzw. Durchgangsöffnung 414 unter Gleitführung ab. Der Ventilstößel 43 besitzt zumindest in seinem Durchführungsbereich durch die Durchgangsöffnung 414 einschließlich seines Verstellbereichs einen gleichbleibenden, insbesondere kreiszylindrischen Querschnitt. Die die Durchgangsöffnung 414 umgebende Innenfläche bzw. Gleitfläche des Zwischenteils 41, insbesondere des Mittelteils 410, besitzt für gute Gleiteigenschaften eine hohe Oberflächengüte, d. h. geringe Rauheit bzw. Rautiefe. Der Ventilstößel 43 hingegeben bedarf in Folge dieser Ausbildung relativ zur Gleitfläche einer lediglich geringen Oberflächengüte und kann entsprechend günstig z. B. in üblicher Weise durch Drehen gefertigt werden, da an ihm keine Reibeffekte auftreten. Vorteilhaft kann das Zwischenteil 41 zumindest im Bereich der Durchgangsöffnung 414 bzw. des in seinem mittleren Bereich eingesetzten Mittelteils 410 aus Kunststoff z. B. im Spritzgussverfahren hergestellt werden, wodurch sich eine entsprechend hohe Oberflächengüte mit einfachen Maßnahmen erreichen lässt.

Bei dem gezeigten Ausführungsbeispiel weist das Zwischenteil 41 im Zentrum das mit der Durchgangsöffnung 414 versehene Innenteil bzw. Mittelteil 410 sowie den mit diesem verbundenen, es umgebenden Außenring 411 auf. An der Unterseite des Zwischenteils 41 ist in dem Außenring 411 im Übergangsbereich zu dem Mittelteil 410 eine Aussparung eingebracht, in die der mit der Dichtfläche 401 des Schließelements 40 zusammenwirkende Dichtring 413 eingesetzt ist. Der Dichtring 413 wird mittels eines radial nach außen vorstehenden Rands des Mittelteils 410 an seiner Unterseite in einem radial innen liegenden Bereich gehalten, so dass seine radial außen liegende Unterseite genügend Fläche zum Abdichten im Zusammenwirken mit der Dichtfläche 401 bietet. Der Mittelteil 410 kann in seinem zentralen Bereich um die Durchgangsöffnung 414 axial eine relativ große Ausdehnung aufweisen, so dass sich für die axiale Verschiebung des Ventilstößels 43 eine gute Führung und genügender Gleitweg für die Spindeldichtung 430 ergibt, wie vorstehend erläutert.

Das Zwischenteil 41, das also z. B. aus zwei oder mehr Komponenten (Mittelteil, Außenring, Dichtungsring) ausgebildet ist, kann vorteilhaft in einem Zweikomponenten-Spritzgussverfahren hergestellt werden, wodurch eine einfache Montage erreicht wird.

Die dargestellte Ausbildung mit der radial außen dichtenden Spindeldichtung 430 in der Führungsbohrung 414 legt den Grundstein für eine fertigungstechnische Optimierung von Ventilen, insbesondere im Zusammenhang mit der Anwendung im Trinkwasserbereich, wie z. B. bei Druckminderern, bietet jedoch auch Vorteile bei vergleichbaren anderen Ventilen mit geführtem Ventilstößel 43 bzw. geführter Ventilspindel, wie in der zugrundeliegenden Prioritätsanmeldung DE 20 2019 102 814.9 dargelegt.

## Patentansprüche

1. Druckminderungsventil (1) für eine durch eine Leitung strömende Flüssigkeit mit einem sich in einer axialen Richtung entlang einer Gehäuseachse (A) erstreckenden Gehäuse (5), in dem in einem Gehäuseunterteil (50) zwischen einem stromaufseitigen Eingangsbereich (2) mit seitlicher Eingangsöffnung und einem stromabseitigen Ausgangsbereich (3) mit seitlicher Ausgangsöffnung eine quer zur Gehäuseachse (A) liegende Zwischenwand (53) mit Durchführöffnung (530) und eine Druckraumanordnung ausgebildet sind, welche von einem darüber in einem Gehäuseoberteil (52) befindlichen Einstellraum (11) mittels einer umfangsseitig gehäusefest eingebauten flexiblen Membran (420) eines Ventileinsatzes (4) getrennt ist,
- wobei die Druckraumanordnung zwischen der Unterseite der Membran (420) und der Oberseite eines ebenfalls gehäusefest eingebauten biegesteifen, insbesondere starren, Zwischenteils (41) einen Zwischenraum (421) und einen mit diesem über mindestens eine in dem Zwischenteil (41) angeordnete Durchgangsbohrung (412) flüssigkeitsleitend in Verbindung gebrachten Durchströmungsraum (10) umfasst, der einen von der Zwischenwand (53) getrennten einströmseitigen Eingangsbereich (2) und einen ausströmseitigen Ausgangsbereich (3) umfasst,
- wobei die Membran (420) in ihrem zentralen Bereich mit einem koaxial zur Gehäuseachse (A) angeordneten und in axialer Richtung hin und her beweglichen Ventilstößel (43) ortsfest und flüssigkeitsdicht verbunden ist, welcher sich flüssigkeitsgedichtet verschieblich durch eine Durchgangsöffnung (414) des Zwischenteils (41) in den Durchströmungsraum (10) erstreckt und in diesem ortsfest mit einem Schließelement (40) verbunden ist, und
- wobei ein Strömungsquerschnitt zwischen der Unterseite des Zwischenteils (41) und der Oberseite des Schließelements (40) entlang eines ringförmigen Dichtbereichs einstellbar ist, indem eine auf den Ventilstößel (43) mittels einer vorgespannten Feder (7) wirkende Federkraft zum Verstellen des Schließelements (40) in Öffnungsrichtung unter Erweitern des Strömungsquerschnitts wirkt und eine durch den Flüssigkeitsdruck in dem Zwischenraum (421) bewirkte Membrankraft zum Verstellen des Schließelements (40) in Schließrichtung unter Verengen des Strömungsquerschnitts wirkt und eine Einstellung des Strömungsquerschnitts sich durch Ausgleich von Federkraft und Membrankraft ergibt,
wobei weiterhin
- das Schließelement (40) in der Durchführöffnung (530) der Zwischenwand (53) in axialer Richtung verschieblich geführt ist,
- das Zwischenteil (41) auf seiner Unterseite in dem Dichtbereich mit einem Dichtring (413) versehen ist und
- die mindestens eine Durchgangsbohrung (412) in dem Zwischenteil (41) außerhalb des Dichtrings (413) unmittelbar neben diesem oder in geringem Abstand kleiner als der halbe Innenradius des Dichtrings (413) von diesem in dem Ausgangsbereich (3) des Durchströmungsraums (10) angeordnet ist,
und wobei
das Schließelement (40) einen zumindest abschnittsweise zur Gehäuseachse (A) konzentrischen, umlaufend geschlossenen zylindrischen Abschnitt aufweist,
das Schließelement (40) mit dem zylindrischen Abschnitt in der Durchführungsöffnung (530) der Zwischenwand (53) umfangsseitig abgedichtet, axial verschieblich geführt ist, und
das Schließelement (40) mit mindestens einem Durchströmkanal (400) versehen ist, um in den Eingangsbereich (2) strömende Flüssigkeit in den Ausgangsbereich (3) weiterzuleiten, wobei eine zum Ausgangsbereich (3) führende Ausgangsöffnung des Durchströmkanals radial innerhalb des Dichtbereichs liegt.

2. Druckminderungsventil nach Anspruch 1,
**dadurch gekennzeichnet,**
**dass** mehrere Durchgangsbohrungen (412) auf einem gedachten Kreisring konzentrisch zu dem kreisförmigen Dichtring (413) und in Umlaufrichtung äquidistant angeordnet sind.

3. Druckminderungsventil nach Anspruch 1 oder 2,
**dadurch gekennzeichnet,**
**dass** das Zwischenteil (41) auf seiner Unterseite ausgehend von seinem ventilstößelseitigen zentralen Bereich nach außen hin bis in den Bereich des Dichtrings (413) radialsymmetrisch konkav gewölbt ist,
wobei die Tangente entlang des in einer Mittellängsebene verlaufenden Wölbungsquerschnitts im ventilstößelseitigen Anfangsbereich der Wölbung mit der Ventilstößelachse einen Winkel (β) zwischen 0° und 45°, insbesondere zwischen 0° und 30°, bildet und in dem ringdichtungsseitigen Endbereich einen Winkel (γ) zwischen 60° und 90°, insbesondere zwischen 75° und 90°, bildet.

4. Druckminderungsventil nach einem der vorhergehenden Ansprüche,
**dadurch gekennzeichnet,**
**dass** die Wandung der mindestens einen Durchgangsbohrung (412) in ihrer dem Durchströmungsraum (10) zugekehrten Stirnseite um die Eingangsöffnung in radialer Richtung nach außen und zur Oberseite hin gegenüber einer zur Gehäuseachse (A) rechtwinkligen Querschnittsebene unter einem Winkel (α) zwischen 20° und 60°, insbesondere zwischen 30° und 55°, abgeschrägt ist.

5. Druckminderungsventil nach Anspruch 1,
**dadurch gekennzeichnet,**
**dass** der mindestens eine Durchströmkanal (400) zumindest abschnittsweise, insbesondere in seinem zum Ausgangsbereich (3) hin führenden Ausgangsabschnitt, parallel zur Gehäuseachse (A) verläuft.

6. Druckminderungsventil nach Anspruch 1 oder 5,
**dadurch gekennzeichnet,**
**dass** ein Durchströmkanal (400) oder eine Anordnung aus mehreren Durchströmkanälen konzentrisch zur Gehäuseachse (A) angeordnet ist.

7. Druckminderungsventil nach einem der vorhergehenden Ansprüche,
**dadurch gekennzeichnet,**
**dass** im Eingangsbereich (2) zwischen einem Flüssigkeitseinlass und dem Schließelement (40) ein Ventilkäfig (6) angeordnet ist, der sich mit seiner Oberseite an die Unterseite der Zwischenwand (53) anschließt und mit einer siebartigen oder gitterartigen Umfangswand das Schließelement (40) unter Abstand umgibt.

8. Druckminderungsventil nach einem der vorhergehenden Ansprüche,
**dadurch gekennzeichnet,**
**dass** die Membran (420) auf ihrer Oberseite in einem mittleren Flächenbereich von einem biegesteifen, insbesondere starren, Membranteller (422) abgedeckt ist, auf dem eine die Federkraft auf die Membran (420) und den Ventilstößel (43) bewirkende Druckfeder (7) abgestützt ist, wobei die Membran (420) in einem radialseitig außerhalb des Membrantellers (422) und innerhalb ihres umfangsseitigen Einspannbereichs liegenden Bereich flexibel in axialer Richtung auslenkbar ist.

9. Druckminderungsventil nach einem der vorhergehenden Ansprüche,
**dadurch gekennzeichnet,**
**dass** die Membran (420) mit ihrem umfangsseitigen Einspannbereich zusammen mit einem umfangsseitigen Einspannbereich des Zwischenteils (41) zwischen dem Gehäuseunterteil (50) und dem Gehäuseoberteil (52) fest eingeklemmt ist.

10. Druckminderungsventil nach einem der Ansprüche 1, 5 bis 9,
**dadurch gekennzeichnet,**
**dass** der Ventilstößel (43) in seinem oberen Abschnitt in der zentralen Durchgangsöffnung des Zwischenteils (41) und in seinem unteren Abschnitt vermittels des fest an ihm angebrachten Schließelements (40) in der Durchführöffnung (530) der Zwischenwand (53) axial verschieblich geführt ist, um den Strömungsquerschnitt zum Erreichen einer definierten Druckminderung zu verändern, wobei sich die vorgegebene oder vorgebbare Federkraft und die Membrankraft ausgleichen.

11. Druckminderungsventil nach einem der vorhergehenden Ansprüche,
**dadurch gekennzeichnet,**
**dass** zur verschieblichen flüssigkeitsgedichteten Durchführung des Ventilstößels (43) durch die Durchgangsöffnung (414) des Zwischenteils (41) eine Spindeldichtung (430) vorhanden ist und
**dass** in die Oberfläche des Ventilstößels (43) eine umlaufende Ringnut (431) eingearbeitet ist, in die die Spindeldichtung (430) eingesetzt ist, wobei sie radial außen dichtend auf der Innenfläche der als Führungsbohrung ausgestalteten Durchgangsöffnung (414) gleitend mit dieser zusammenwirkt.

12. Druckminderungsventil nach Anspruch 11,
**dadurch gekennzeichnet,**
**dass** der Ventilstößel (43) zumindest im Bereich der Ringnut (431) und in ihrem axial an diese angrenzenden Bereich eine geringere Oberflächengüte aufweist als die als Gleitfläche ausgebildete Innenfläche der Durchgangsöffnung (414).

13. Ventil nach einem der vorhergehenden Ansprüche,
**dadurch gekennzeichnet,**
**dass** der Ventilstößel (43) aus Metall und das die Durchgangsöffnung (414) aufweisende gehäusefeste Zwischenteil (41), insbesondere ein darin vorhandenes konzentrisches Mittelteil (410), aus Kunststoff und/oder Metall besteht.

14. Ventil nach einem der vorhergehenden Ansprüche,
**dadurch gekennzeichnet,**
**dass** das Zwischenteil (41) aus mindestens zwei Komponenten zusammengesetzt ist, wobei die mindestens zwei Komponenten einen die als Führungsbohrung ausgebildete Durchgangsöffnung (414) aufweisenden Mittelteil (410) und einen diesen umgebenden Außenring (411) umfassen.

15. Ventil nach Anspruch 14,
**dadurch gekennzeichnet,**
**dass** der Dichtring (413) in eine Ausnehmung des Außenrings (411) eingesetzt ist und von einer radial nach außen vorstehenden Überlappung des Mittelteils (410) gehalten ist.

16. Ventil nach Anspruch 14 oder 15
**dadurch gekennzeichnet,**
**dass** das Zwischenteil (41) in einem Zweikomponenten-Spritzgussverfahren hergestellt ist.

## Claims

1. Pressure reducing valve (1) for a fluid flowing through a line, comprising a housing (5) which extends in an axial direction along a housing axis (A) and in which, in a housing lower part (50), between an upstream inlet region (2) with a lateral inlet opening and a downstream outlet region (3) with a lateral outlet opening, an intermediate wall (53), which lies transversely to the housing axis (A) and which comprises a feed-through opening (530), and a pressure chamber arrangement are formed, which pressure chamber arrangement is separated from an adjustment space (11) located thereabove in a housing upper part (52) by means of a flexible diaphragm (420) of a valve insert (4), which diaphragm is installed so as to be circumferentially secured to the housing,
- wherein the pressure chamber arrangement includes, between the underside of the diaphragm (420) and the upper side of an inflexible, in particular rigid, intermediate part (41), which is also installed so as to be secured to the housing, an intermediate space (421) and a through-flow space (10) which is fluidically connected to said intermediate space via at least one through-hole (412) arranged in the intermediate part (41), which through-flow space includes an inflow-side inlet region (2) separated from the intermediate wall (53) and an outflow-side outlet region (3),
- wherein the diaphragm (420) is, in its central region, fixedly connected in a fluid-tight manner to a valve tappet (43) which is arranged coaxially with the housing axis (A) and can be moved back and forth in the axial direction, which valve tappet extends slidably through a through-opening (414) of the intermediate part (41) into the through-flow space (10) in a fluid-tight manner and, in said through-flow space, is fixedly connected to a closing element (40), and
- wherein a flow cross section between the underside of the intermediate part (41) and the upper side of the closing element (40) is adjustable along an annular sealing region by a spring force that acts on the valve tappet (43) by means of a preloaded spring (7) acting in order to shift the closing element (40) in the opening direction under expansion of the flow cross section, and a diaphragm force brought about by the fluid pressure in the intermediate space (421) acting in order to shift the closing element (40) in the closing direction under narrowing of the flow cross section, and an adjustment of the flow cross section resulting due to compensation for the spring force and the diaphragm force,
wherein further
- the closing element (40) is slidably guided in the feed-through opening (530) of the intermediate wall (53) in the axial direction,
- the intermediate part (41) is provided on its underside in the sealing region with a sealing ring (413), and
- the at least one through-hole (412) is arranged in the intermediate part (41) outside the sealing ring (413) directly next to said ring or at a small distance therefrom that is smaller than half the internal radius of the sealing ring (413) in the outlet region (3) of the through-flow space (10),
and wherein
the closing element (40) comprises a circumferentially closed cylindrical portion which is concentric with the housing axis (A) at least in portions,
the cylindrical portion of the closing element (40) extends axially slidably in the feed-through opening (530) of the intermediate wall (53) in a circumferentially sealed manner, and
the closing element (40) is provided with at least one through-flow channel (400) in order to convey, into the outlet region (3), the fluid flowing into the inlet region (2), wherein an outlet opening of the through-flow channel leading to the outlet region (3) lies radially within the sealing region.

2. Pressure reducing valve according to claim 1,
**characterized in that** a plurality of through-holes (412) are arranged on an imaginary circular ring concentrically with the circular sealing ring (413) and equidistantly in the circumferential direction.

3. Pressure reducing valve according to either claim 1 or claim 2,
**characterized in that** the intermediate part (41) is radially symmetrically concavely curved on its underside, starting from its valve-tappet-side central region outward as far as the region of the sealing ring (413),
the tangent along the curve cross section in the valve-tappet-side starting region of the curve, which cross section extends in a central longitudinal plane, forming an angle (β) with the valve tappet axis of between 0° and 45°, in particular between 0° and 30°, and, in the annular-seal-side end region, forming an angle (γ) of between 60° and 90°, in particular between 75° and 90°.

4. Pressure reducing valve according to any of the preceding claims,
**characterized in that** the wall of the at least one through-hole (412), in its end face facing the through-flow space (10), is beveled around the inlet opening in the radial direction outward and toward the upper side at an angle (α) of between 20° and 60°, in particular between 30° and 55°, with respect to a cross-sectional plane perpendicular to the housing axis (A).

5. Pressure reducing valve according to claim 1,
**characterized in that** the at least one through-flow channel (400) extends, at least in portions, in particular in its outlet portion leading to the outlet region (3), in parallel with the housing axis (A).

6. Pressure reducing valve according to claim 1 or claim 5,
**characterized in that** a through-flow channel (400) or an arrangement consisting of a plurality of through-flow channels is arranged concentrically with the housing axis (A).

7. Pressure reducing valve according to any of the preceding claims,
**characterized in that** a valve cage (6) is arranged in the inlet region (2) between a fluid intake and the closing element (40), the upper side of which valve cage adjoins the underside of the intermediate wall (53), and a sieve-like or lattice-like circumferential wall of which valve cage surrounds the closing element (40) at a distance.

8. Pressure reducing valve according to any of the preceding claims,
**characterized in that** the diaphragm (420) is covered on its upper side in a central surface region by an inflexible, in particular rigid, diaphragm disk (422) on which a compression spring (7), which causes the spring force to act on the diaphragm (420) and the valve tappet (43), is supported, it being possible for the diaphragm (420) to be flexibly deflected in the axial direction in a region lying radially outside the diaphragm disk (422) and within the circumferential clamping region of the diaphragm.

9. Pressure reducing valve according to any of the preceding claims,
**characterized in that** the circumferential clamping region of the diaphragm (420) is fixedly clamped, between the housing lower part (50) and the housing upper part (52), together with a circumferential clamping region of the intermediate part (41).

10. Pressure reducing valve according to any of claims 1 and 5 to 9,
**characterized in that** the valve tappet (43) extends axially slidably in its upper portion in the central through-opening of the intermediate part (41) and in its lower portion, by means of the closing element (40) fixedly attached thereto, in the feed-through opening (530) of the intermediate wall (53), in order to change the flow cross section to achieve a defined pressure reduction, the pre-specified or pre-specifiable spring force and the diaphragm force being compensated for.

11. Pressure reducing valve according to any of the preceding claims,
**characterized in that** a spindle seal (430) is provided for slidable fluid-tight feeding of the valve tappet (43) through the through-opening (414) of the intermediate part (41), and
**in that** a circumferential annular groove (431) is incorporated into the surface of the valve tappet (43), into which annular groove the spindle seal (430) is inserted, said spindle seal interacting radially outwardly sealingly with the through-opening (414), which is in the form of a guide hole, so as to slide on the inner surface of said guide hole.

12. Pressure reducing valve according to claim 11,
**characterized in that** the valve tappet (43) comprises, at least in the region of the annular groove (431) and in its region axially adjacent thereto, a lower surface quality than the inner surface of the through-opening (414), which inner surface is in the form of a sliding surface.

13. Valve according to any of the preceding claims,
**characterized in that** the valve tappet (43) is made of metal and the intermediate part (41), in particular a concentric central part (410) provided in said intermediate part, is made of plastics material and/or metal, which intermediate part comprises the through-opening (414) and is secured to the housing.

14. Valve according to any of the preceding claims,
**characterized in that** the intermediate part (41) is composed of at least two components, the at least two components including a central part (410), which comprises the through-opening (414) in the form of a guide hole, and an outer ring (411) surrounding said central part.

15. Valve according to claim 14,
**characterized in that** the sealing ring (413) is inserted into a recess in the outer ring (411) and is held by a radially outwardly projecting overlap of the central part (410).

16. Valve according to either claim 14 or claim 15,
**characterized in that** the intermediate part (41) is produced in a two-component injection molding process.

## Revendications

1. Soupape de réduction de pression (1) pour un liquide s'écoulant à travers une conduite, comportant un boîtier (5) s'étendant dans une direction axiale le long d'un axe de boîtier (A), dans lequel boîtier, dans une partie inférieure de boîtier (50), entre une zone d'entrée (2) côté amont comportant une ouverture d'entrée latérale et une zone de sortie (3) côté aval comportant une ouverture de sortie latérale, une paroi intermédiaire (53) située transversalement par rapport à l'axe de boîtier (A) et comportant une ouverture de passage (530) et un agencement d'espace de pression sont réalisés, lequel agencement est séparé d'un espace de réglage (11) se trouvant au-dessus de celui-ci dans une partie supérieure de boîtier (52) au moyen d'une membrane (420), flexible et montée de manière solidaire du boîtier côté circonférence, d'un insert de soupape (4),
- dans laquelle l'agencement d'espace de pression comprend, entre la face inférieure de la membrane (420) et la face supérieure d'une partie intermédiaire (41) rigide en flexion, en particulier indéformable, et également montée de manière solidaire du boîtier, un espace intermédiaire (421) et un espace d'écoulement (10) amené en liaison d'une manière conductrice de liquide avec ledit espace intermédiaire par l'intermédiaire d'au moins un trou traversant (412) disposé dans la partie intermédiaire (41), lequel espace d'écoulement comprend une zone d'entrée (2) séparée de la paroi intermédiaire (53) côté admission et une zone de sortie (3) côté évacuation,
- dans laquelle la membrane (420) est reliée, de manière fixe en position et de manière étanche aux liquides, dans sa zone centrale, à un poussoir de soupape (43) disposé de manière coaxiale par rapport à l'axe de boîtier (A) et mobile en va-et-vient dans la direction axiale, lequel poussoir de soupape s'étend de manière à coulisser de manière étanche aux liquides à travers une ouverture traversante (414) de la partie intermédiaire (41) dans l'espace d'écoulement (10), et est relié dans ledit espace d'écoulement à un élément de fermeture (40) de manière fixe en position, et
- dans laquelle une section transversale d'écoulement entre la face inférieure de la partie intermédiaire (41) et la face supérieure de l'élément de fermeture (40) peut être réglée le long d'une zone d'étanchéité annulaire par le fait qu'une force de ressort agissant sur le poussoir de soupape (43) au moyen d'un ressort (7) précontraint agit pour le coulissement de l'élément de fermeture (40) dans le sens de l'ouverture en élargissant la section transversale d'écoulement, et qu'une force de membrane exercée par la pression de liquide dans l'espace intermédiaire (421) agit pour le coulissement de l'élément de fermeture (40) dans le sens de la fermeture en rétrécissant la section transversale d'écoulement, et qu'un réglage de la section transversale d'écoulement est effectué par la compensation de la force de ressort et de la force de membrane,
dans laquelle en outre
- l'élément de fermeture (40) est guidé de manière à coulisser dans la direction axiale dans l'ouverture de passage (530) de la paroi intermédiaire (53),
- la partie intermédiaire (41) est pourvue d'une bague d'étanchéité (413) sur sa face inférieure dans la zone d'étanchéité et
- l'au moins un trou traversant (412) est disposé dans la partie intermédiaire (41) à l'extérieur de la bague d'étanchéité (413), directement à côté de celle-ci ou à une faible distance par rapport à celle-ci, laquelle distance est inférieure à la moitié du rayon intérieur de la bague d'étanchéité (413), dans la zone de sortie (3) de l'espace d'écoulement (10),
et dans laquelle
l'élément de fermeture (40) présente une section cylindrique, fermée de manière circonférentielle, et concentrique à l'axe de boîtier (A), au moins dans certaines sections,
l'élément de fermeture (40) est guidé avec la section cylindrique de manière à coulisser axialement et de manière étanche côté circonférence dans l'ouverture de passage (530) de la paroi intermédiaire (53), et
l'élément de fermeture (40) est pourvu d'au moins un canal d'écoulement (400) pour acheminer du liquide s'écoulant dans la zone d'entrée (2) vers la zone de sortie (3), dans laquelle une ouverture de sortie du canal d'écoulement menant vers la zone de sortie (3) est située radialement à l'intérieur de la zone d'étanchéité.

2. Soupape de réduction de pression selon la revendication 1,
**caractérisée en ce que** plusieurs trous traversants (412) sont disposés sur une bague circulaire imaginaire de manière concentrique par rapport à la bague d'étanchéité (413) circulaire et de manière équidistante dans la direction circonférentielle.

3. Soupape de réduction de pression selon la revendication 1 ou 2,
**caractérisée en ce que** la partie intermédiaire (41) est courbée sur sa face inférieure de manière concave et de manière radialement symétrique, en partant de sa zone centrale côté poussoir de soupape vers l'extérieur jusque dans la zone de la bague d'étanchéité (413),
dans laquelle la tangente, le long de la section transversale de courbure s'étendant dans un plan longitudinal médian, dans la zone initiale de la courbure côté poussoir de soupape, forme avec l'axe de poussoir de soupape un angle (β) compris entre 0° et 45°, en particulier entre 0° et 30°, et, dans la zone d'extrémité côté joint annulaire, forme un angle (γ) compris entre 60° et 90°, en particulier entre 75° et 90°.

4. Soupape de réduction de pression selon l'une des revendications précédentes, **caractérisée en ce que** la paroi de l'au moins un trou traversant (412) est inclinée selon un angle (α) compris entre 20° et 60°, en particulier entre 30° et 55°, dans sa face frontale tournée vers l'espace d'écoulement (10), autour de l'ouverture d'entrée dans la direction radiale vers l'extérieur et vers la face supérieure par rapport à un plan de section transversale perpendiculaire à l'axe de boîtier (A).

5. Soupape de réduction de pression selon la revendication 1,
**caractérisée en ce que** l'au moins un canal d'écoulement (400) s'étend parallèlement à l'axe de boîtier (A) au moins dans certaines sections, en particulier dans sa section de sortie menant vers la zone de sortie (3).

6. Soupape de réduction de pression selon la revendication 1 ou 5,
**caractérisée en ce qu'**un canal d'écoulement (400) ou un agencement constitué de plusieurs canaux d'écoulement est disposé de manière concentrique par rapport à l'axe de boîtier (A).

7. Soupape de réduction de pression selon l'une des revendications précédentes, **caractérisée en ce que**, dans la zone d'entrée (2), entre une entrée de liquide et l'élément de fermeture (40), est disposée une cage de soupape (6) qui se raccorde par sa face supérieure à la face inférieure de la paroi intermédiaire (53) et entoure à distance l'élément de fermeture (40) par une paroi circonférentielle en forme de tamis ou en forme de grille.

8. Soupape de réduction de pression selon l'une des revendications précédentes, **caractérisée en ce que** la membrane (420) est recouverte sur sa face supérieure, dans une zone de surface centrale, d'une plaque de membrane (422) rigide en flexion, en particulier indéformable, sur laquelle est appuyé un ressort de compression (7) exerçant la force de ressort sur la membrane (420) et le poussoir de soupape (43), dans laquelle la membrane (420) peut être déviée de manière flexible dans la direction axiale dans une zone située côté radial à l'extérieur de la plaque de membrane (422) et à l'intérieur de sa zone de serrage côté circonférence.

9. Soupape de réduction de pression selon l'une des revendications précédentes, **caractérisée en ce que** la membrane (420) est serrée fermement avec sa zone de serrage côté circonférence, conjointement avec une zone de serrage côté circonférence de la partie intermédiaire (41), entre la partie inférieure de boîtier (50) et la partie supérieure de boîtier (52).

10. Soupape de réduction de pression selon l'une des revendications 1, 5 à 9, **caractérisée en ce que** le poussoir de soupape (43), dans sa section supérieure dans l'ouverture traversante centrale de la partie intermédiaire (41) et dans sa section inférieure, est guidé de manière à coulisser axialement dans l'ouverture de passage (530) de la paroi intermédiaire (53) au moyen de l'élément de fermeture (40) fixé fermement audit poussoir de soupape afin de modifier la section transversale d'écoulement pour l'obtention d'une réduction de pression définie, dans laquelle la force de ressort prédéfinie ou pouvant être prédéfinie et la force de membrane s'équilibrent.

11. Soupape de réduction de pression selon l'une des revendications précédentes, **caractérisée en ce que**, pour le passage de manière à coulisser et de manière étanche aux liquides du poussoir de soupape (43) à travers l'ouverture traversante (414) de la partie intermédiaire (41), un joint de tige (430) est prévu et
**que**, dans la surface du poussoir de soupape (43), une rainure annulaire (431) circonférentielle est ménagée, dans laquelle rainure annulaire est inséré le joint de tige (430), dans laquelle ladite rainure annulaire coopère par glissement avec l'ouverture traversante, de manière étanche radialement à l'extérieur, sur la surface intérieure de l'ouverture traversante (414) conçue en tant que trou de guidage.

12. Soupape de réduction de pression selon la revendication 11,
**caractérisée en ce que** le poussoir de soupape (43) présente, au moins dans la zone de la rainure annulaire (431) et dans sa zone axialement adjacente à celle-ci, une qualité de surface inférieure à celle de la surface intérieure, réalisée en tant que surface de glissement, de l'ouverture traversante (414).

13. Soupape selon l'une des revendications précédentes,
**caractérisée en ce que** le poussoir de soupape (43) est en métal et la partie intermédiaire (41) solidaire du boîtier et présentant l'ouverture traversante (414), en particulier une partie centrale (410) concentrique prévue dans ladite partie intermédiaire, est en matière plastique et/ou en métal.

14. Soupape selon l'une des revendications précédentes,
**caractérisée en ce que** la partie intermédiaire (41) est constituée d'au moins deux composants, dans laquelle les au moins deux composants comprennent une partie centrale (410) présentant l'ouverture traversante (414) réalisée en tant que trou de guidage et une bague extérieure (411) entourant ladite partie centrale.

15. Soupape selon la revendication 14,
**caractérisée en ce que** la bague d'étanchéité (413) est insérée dans un évidement de la bague extérieure (411) et est maintenue par un chevauchement faisant saillie radialement vers l'extérieur de la partie centrale (410).

16. Soupape selon la revendication 14 ou 15
**caractérisée en ce que** la pièce intermédiaire (41) est fabriquée par un procédé de moulage par injection de deux composants.
